# EUROPEAN PATENT SPECIFICATION

(11) **EP 2 104 647 B1**
(45) Date of publication and mention of the grant of the patent: **25.07.2012**
(21) Application number: 07857675.8
(22) Date of filing: 17.12.2007
(51) Int. Cl.: C02F 1/50, C02F 1/68, A47L 15/44, D06F 39/02

(54) **WATER PURIFICATION PROCESS EMPLOYING GRAVITY-FED APPARATUS WITH VENTURI DOSING DEVICE**
WASSERREINIGUNGSVERFAHREN MIT SCHWERKRAFTGESPEISTER APPARATUR MIT VENTURI-DOSIERVORRICHTUNG
PROCEDE DE PURIFICATION D'EAU AVEC APPAREIL ALIMENTÉ PAR GRAVITÉ ÉQUIPÉ D'UN DISPOSITIF DE DOSAGE À VENTURI

(30) Priority: 12.01.2007 IN MU00572007; 28.02.2007 EP 07103189
(43) Date of publication of application: 30.09.2009
(73) Proprietor: Unilever N.V., 3013 AL Rotterdam (NL); Unilever PLC, London EC4Y 0DY (GB)
(72) Inventor: AGARWAL, Swati, Bangalore, Whitefield 560 066 (IN); CHATTERJEE, Jaideep, Bangalore, Whitefield 560 066 (IN); DAGAONKAR, Manoj, Vilas, Bangalore, Whitefield 560 066 (IN); MAJUMDAR, Udayan, Bangalore, Whitefield 560 066 (IN)
(74) Representative: Cromsigt, Jenny
(86) International application number: PCT/EP2007/064044
(87) International publication number: WO 2008/083896

(56) References cited:
- WO-A-03/086597
- WO-A-2004/074182
- GB-A- 725 913
- GB-A- 1 134 483
- GB-A- 1 600 289
- US-A- 4 438 534
- US-A1- 2005 137 118
- US-B1- 6 358 425
- US-B1- 6 936 176

## Description

### FIELD OF THE INVENTION

The present invention relates to a process for the purification of drinking water with a gravity fed water purification device having controlled dosing of liquid biocide for providing safe and hygienic water for potable purposes.

### BACKGROUND AND PRIOR ART

With the advent of highly industrialized societies and increasing human population all over the world, the availability of safe potable water for human consumption is becoming an important concern. While rampant industrialization has brought with it the desired improvements in the comfort levels of many, the side effects of this has caused severe stress on the ecosystem. One such stress is the pollution of clean water sources traditionally used for potable purposes like wells, rivers, streams and lakes. Not only are the waters getting polluted with chemicals but also harmful micro organisms from such Industrial and agricultural wastes.

With the realization of the need for purification of water, several water purification technologies have been developed and commercialized over the last several decades. One class of such technologies are directed to purification of water at the municipal level while another class is for use in individual homes. In the rural and semi-urban areas, there are little if any municipal water treatment systems. In the urban areas having municipal water treatment systems, the water tends to get partly contaminated during its passage in pipelines from the municipal water treatment plants to the individual homes. Hence there is a demand for water purification devices for use in homes. The traditional method of purifying water is boiling which is turning out to be expensive due to the increasing cost of fuel or electricity needed to boil water. There are many other devices e.g. those based on ultra-violet radiation or reverse-osmosis which provide safe drinking water. They have the disadvantage that they need electricity and running water to run those units. In many rural areas and in developing countries, continuous supply of electricity is often not available. People often have to collect water in pots and drums from wells and community water taps and therefore running water in the kitchens is also not readily available. Hence a more recent class of water purification devices have been tailored to operated without electricity and running water and still provide safe drinking water.

In these kinds of devices, often called gravity fed devices, the kill of the micro organisms is effected by adding biocides to the water. The biocides may be in the solid, liquid or gaseous forms. Examples of solid biocides are calcium hypochlorite, sodium dichloroisocyanurate, trichlorocyanuric acid etc. Ozone and chlorine are examples of gaseous biocides. Solid biocides have the advantage that weighed amounts of the biocides can be added to batches of water for the desired dosage levels. However, it is not very easy to dose accurate amounts of solid biocides into semi-continuous water purification systems like gravity fed devices where water flows from an inlet top chamber into the purified bottom chamber. Gaseous biocides suffer from the disadvantage that they are not convenient to store in home purification systems.

Liquid biocides include sodium hypochlorite, iodine, quaternary ammonium compounds and gluteraldehyde. In semi-continuous systems like gravity fed water purification systems, one would assume that dosing of liquid biocides would be the most convenient and easy. This is generally true for industrial scale purifiers like those in the municipal treatment plants. For use in home purifiers, there are certain problems with use of liquid biocides. For ensuring a compact home device, the volume of the biocide chamber has to be low which means that it is necessary that high concentrations of liquid biocide solution are used. The amount of biocide needed for microbiological kill is often in the order of a few parts per million i.e 0.0001 % and upwards. Adding too much of the biocide requires additional units to scavenge the biocide before it is consumed by the humans else it would produce bad taste and smell and can be harmful at too high concentrations. Hence extreme control on the amounts of biocide dosed is important.

One of the desirable requirements in such semi-continuous systems is an auto-proportioning device for controlled dosing of the liquid biocide. The auto-proportioning device is one which ensures that the quantity of liquid biocide being dosed is proportional to the quantity of water to be purified and this has to be achieved without the availability of electrical control devices. A very simple static mechanical device which has been used in the past is the venturi.

The venturi is a simple device which consists of a tube having a constricted portion which is connected to a source of liquid to be dosed. When water flows through the tube and passes through the constricted portion, the increase in the velocity of the water as it passes through the constricted portion causes a consequent decrease in the pressure in that portion. This reduction in pressure is utilized for suction of a liquid to be dosed. When carefully designed the amount dosed is proportional to the amount of water flowing through the tube.

Several prior art documents describe the use of this principle for auto-prooortionating dosage of one liquid into a flowing stream of a second liquid. US 20060109736 describes a mixing-dosing device for mixing and dosing a cleaning solute with a solvent, the device comprising a mixing flask having an opening; the mixing dosing device including a body and a cover which is removably attachable at said opening, the cover having a venturi substantially formed by a tubular element in which the mixing of the solute and the solvent occurs, the device characterized in having a radial hole on the tubular element which decides the proportioning between the solvent and the solute and cover having an openable air entry formed therein. This invention is directed to mixing of a cleaning fluid with water where the dilution ratio and the consequent accuracy and reproducibility is not very high and does not have enough consistency over time to ensure meeting the tight control of biocide concentration for use in a gravity fed water purification system.

EP0736483B1 (1998) describes a concentrate dosing device for a fruit juice dispenser where the fruit juice concentrate and water are mixed using a device which works on the venturi principle, the dosing device having a refrigeration means, two level detectors for controlling the low and high level in the dispensing tank a vacuum actuated valve that sweeps in air for carrying the portion of concentrate in the line which is activated by a concentrate presence detector in the concentrate line. Although this device comprises a venturi it operates under electricity for a large number of control functions which the device of the present invention does not require.

The venturi has also been used in devices where they have been used to deliver biocides. US6272879B1 (2001) describes a liquid chilling system for chilling and disinfecting a liquid of a container comprising a support frame; a cooling means attached to the support frame; a liquid conducting means which includes an intake section for input of liquid from a container, a chilling section and a liquid returning section to return chilled liquid to the container, this circulation enabled using a pumping means; a liquid disinfection means connected to the liquid conducting means comprising a venturi for dispensing a bactericide; and a filtering means for retaining any undesirable solid forms in the liquid circulating through the liquid conducting means. This publication is directed to disinfection of containers where chilled water is to be stored and used. The flow of liquid is controlled using a pump and therefore can be accurately controlled to a high degree. Therefore the reproducibility of the biocide suction using the venturi is highly predictable. Such is not the case with a gravity fed water purification system of the present invention where the flow rate of the water can vary in a wide range depending on the height to which the consumer fills the water in the top chamber. The biocide delivery system in this case has to be configured to deliver accurate amounts of biocide under these varying head conditions.

US2004/0055969 describes a water treatment system and method comprising a mixing apparatus that receives ozone, a chemical composition that is dispensed using a venturi and contaminated water to form a mixture for oxidizing and disinfecting the water to kill algae. The system is built for high level of ozone flow and chemical composition. The inventive step in this patent application is the separator that separates the ozone from the water to efficiently recycle the ozone. In this system also the flow rate of the water is carefully controlled using a pump and therefore it is relatively easy to control the chemical composition sucked in using the venturi for disinfecting the water. Further this system is generally used for purifying, clarifying and stabilizing water in swimming pools, spa, hot-tub or other circulating systems where the control on the biocide concentration is not as stringent as it needs to be in drinking water systems.

Thus, none of the above prior art describe a solution to the specific problems faced in gravity fed water purification device i.e. accurate and reproducible control of the biocide concentration over a large dilution ratio using a venturi that leads from a small biocide chamber having a highly concentrated biocide feed solution to a large tank of water to provide ppm levels of biocide in the water to be purified. These dual and contrasting requirements necessitate finding a solution to ensuring much higher levels of accuracy in biocide dosing while meeting this requirement on a consistent basis over time. The present inventors have found a solution to this problem by constructing a unique configuration of a biocide dosing device having a venturi in a gravity fed water purification to overcome most of the disadvantages of the dosing systems of the prior art.

### OBJECTS OF THE INVENTION

It is thus an object of the present invention to provide for a process for dispensing liquid biocide solutions in to water to be purified in a gravity fed water purification device.

It is another object of the present invention to provide for a process for dispensing liquid biocide solutions in to water in a gravity fed water purification device that provides large dilution ratio consistently over long time.

It is yet another object of the present invention to provide for a process for dispensing liquid biocide solution in to water where neither the water flow nor the biocide flow is controlled using any electrically controlled devices.

### SUMMARY OF THE INVENTION

The present invention provides a process for the purification of drinking water with a gravity-fed water purification device comprising
(a) a top chamber in fluid communication with a bottom chamber through (i) a biocide dosing passage comprising a venturi and (ii) a by-pass passage wherein the cross-sectional area of said by-pass passage is greater than the cross-sectional area of the constricted zone of the venturi;
(b) said biocide dosing passage is in fluid communication with a biocide container containing a liquid biocide; as further specified in claim 1.

As a result part of the water fed to the top chamber, traverses through said biocide dosing passage and through said venturi causing biocide to be drawn into said venturi, while a part of the water from the top chamber traverses through said bypass passage to collect in said bottom chamber.

Preferably said device comprises a siphon-tube positioned before said venturi and in fluid communication with it. Presence of the siphon provides for a nearly constant flow-rate of water through said venturi.

### DETAILED DESCRIPTION OF THE INVENTION

The invention relates to a water purification process that can be used in individual homes. It is configured to provide for a family's safe drinking water requirement at low cost. It does not require electric power supply and running water. It operates on a batch or semi-batch mode, where one needs to add desired quantity of water to the top chamber of the water purification device. The invention works well for top chamber volumes in this range of 1 to 100 litres, more preferably 1 to 50 litres.

The essential features of the device used in the process of the invention are a top chamber and a bottom chamber which are connected through at least two passages. One essential passage from the top chamber to the bottom chamber is called the biocide dosing passage and it comprises a venturi. The device comprises at least one other passage from the top chamber to the bottom chamber which is a by-pass passage.

It is possible to have more than one by-pass passage as per the device of the invention. When there is only one by-pass passage, it has a larger cross-sectional area compared to the cross-sectional area of the constricted zone of the venturi. When there are more than one by-pass passages, at least one of the by-pass passages has a larger cross-sectional area compared to the cross-sectional area of the constricted zone of the venturi. Providing such a requirement, on the one hand ensures critical control on the concentration of the biocide in the bottom chamber which is generally required in the range of 0.5 to 100 parts per million (ppm) by weight starting from a feed liquid biocide which is available generally in the range of 0.01 to 50 weight % concentration In water. On the other hand providing the by-pass passage ensures sufficient turbulence in the water flowing from the top chamber to the bottom chamber thereby enabling quick and reliable mixing of the liquid biocide with the water in the bottom chamber. The ratio of the cross-sectional area of the by-pass passage to the cross-sectional area of the constricted zone of the venturi is in the range of 1.2:1 to 400:1 more preferably in the range of 2:1 to 50:1.

By the cross-sectional area of the bypass passage is meant the cross sectional area of the narrowest portion of the bypass passage. For a passage having a regular cross-section like a circle, oval, square or rectangle, the cross-sectional area is generally uniform over the length of the passage. For a passage having an irregular cross-section, the cross-sectional area of the narrowest portion is defined to be the cross-sectional area of the passage.

The biocide is dosed in to the water passing through the biocide dosing passage by use of an appropriate venturi. The biocide is stored in a biocide container which is generally positioned below the venturi i.e. the liquid biocide is sucked up against gravity by the venturi action. In the present invention the venturi is preferably positioned 0,1 to 10 cm above the top of the biocide container. The amount of liquid biocide sucked up into the water flowing through the liquid biocide passage is dependent on the flow rate of the water through the biocide dosing passage. Providing for the at least one by-pass passage ensures that very concentrated liquid biocides can be used. This makes it possible to have small biocide containers thereby ensuring an over all compact design. The invention also ensures that the liquid biocide need not be refilled too frequently in the liquid biocide container.

Suitable liquid biocides that can be used in the device of the invention include aqueous solutions of sodium hypochlorite, sodium dichloro-isocyanuric acid, iodine, quaternary ammonium compounds or gluteraldehyde. Most preferred liquid biocide is an aqueous solution of sodium hypochlorite. When sodium hypochlorite is the liquid biocide used, it is added in the biocide container at a concentration in the range of 0.01 to 50 weight %, more preferably in the range of 1 to 20 weight % in water. With the use of the device of the invention, it is possible to get the concentration of the biocide in the bottom chamber in the range of 0.5 to 100 ppm by weight, more preferably in the range of 1 to 50 ppm by weight in water.

The water flows from the biocide dosing passage through a venturi before exiting in to the bottom chamber.

Venturis are devices where fluid or air flows through a tube or pipe with a constriction in it. The principles of venturis are well understood and the dynamics are generally calculated using the Bernoulli's principle. In the venturi, the fluid speeds up in the constriction, reducing its pressure and producing a partial vacuum in that zone. The venturi effect has been used in many applications. Prominent among them are devices to measure the speed of a fluid by measuring pressure changes at different segments of the device. The venturi effect is also used for an academic demonstration of lift in an airplane wing.

A too large cross section of the constricted zone may give the risk of entrainment of air bubbles in the venturi, resulting in reduced accuracy. Relatively narrow constricted zone of the venturi is preferred. Thus, preferred venturis in the device of the present invention have ratio of the cross sectional area of the inlet zone of the biocide dosing passage to the cross-sectional area of the constricted zone of the venturi in the range of 1.5:1 to 100:1 more preferably in the range of 1.5:1 to 50:1.

The outlet of the bypass passage is preferably designed to ensure high turbulence in the water as it flows in to the bottom chamber. This may be generated by ensuring that sufficient height is provided between the top of the bottom chamber and the outlet of the bypass passage. Alternately outlet of the by-pass passage is provided with a distributor.

Apart from the above indicated effects of the ratio between cross section of the inlet and constricted zone of the venturi, and the ratio between the cross section of the by pass and the constricted zone of the venturi, the biocide dosing is also influenced by the ratio between the cross section of the biocide suction passage and the cross section of the constricted zone of the venturi. If the constricted zone of the venturi is too wide compared to the biocide suction passage, the reduced pressure may not be able to provide accurate biocide dosing. On the other hand, if the biocide suction passage is too narrow, the wall friction experienced by the biocide inside the biocide suction passage, depending on the viscosity of the biocide, may also result in inaccurate dosing. Therefore, it is preferred that the range of the ratio of cross-sectional area of venturi to that of the biocide suction passage is between 2:1 and 20:1.

Generally in gravity fed water purification devices, the feed water is filtered free of particulate contaminants before it is treated with the biocide. In the present invention it has been determined that the device provides better performance when a filter for removing particulate material is provided after the biocide has been dosed into the water, when the device does not include the siphon chamber and siphon-tube. On the other hand, when the device includes the siphon chamber having the siphon-tube, it is preferred that the filter is located before the siphon chamber, such that water is relatively free from particulate material, cysts and the like, before entering the siphon chamber. Suitable types of filters are those comprising carbon or made of a fabric or combinations thereof. Fabric filter may be made of woven or non woven fabric, preferably non-woven fabric. Suitable fabrics are made of polyester or polypropylene.

The invention will now be illustrated with reference to the exemplary embodiments.

### BRIEF DESCRIPTION OF THE DRAWINGS

Figure 1 is schematic of an embodiment of the gravity fed water purification device as per the invention.

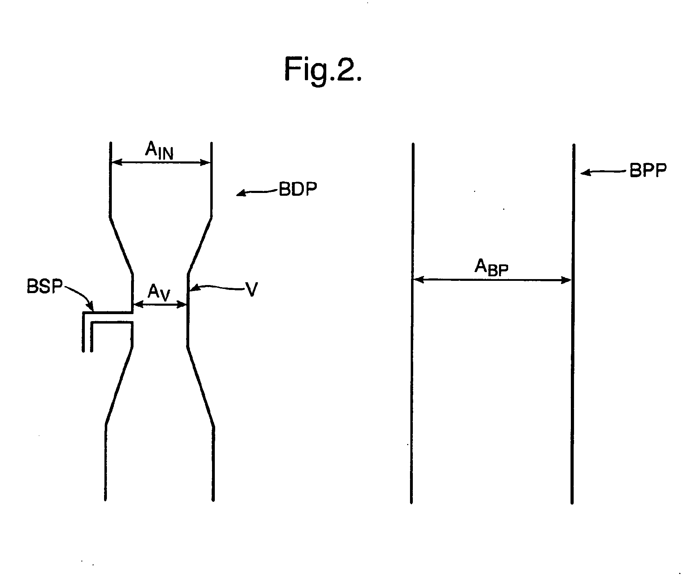

Figure 2 is a blown up view of the section C shown in Figure-1 indicating the relative dimensions of the biocide dosing passage with the venturi and the bypass passage.
Figure 3 is the schematic of another embodiment of the gravity fed water purification device as per the invention, which includes a siphon tube.
Figure 4 is a blown up view of the section D shown in Figure-3 showing the siphon tube and the venturi.
Figure 5 is a graph showing the plot of Chlorine dosage against time, when using the embodiment of figure 3.

### DETAIL DESCRIPTION OF THE DRAWINGS

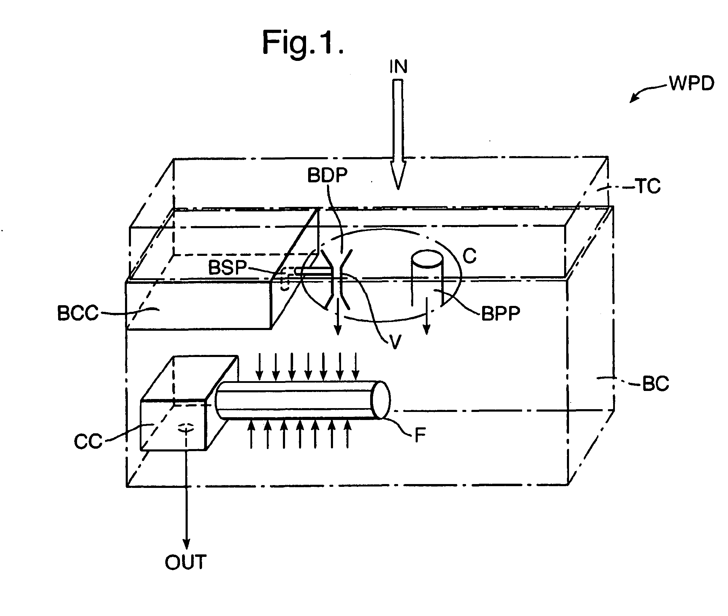

Referring to the drawings, Figure 1 is a gravity fed water purification device (WPD) as per the invention. The water purification device comprises a top chamber (TC) and a bottom chamber (BC). The top chamber and the bottom chamber are connected through two parallelly configured passages i.e. a biocide dosing passage (BDP) and a by-pass passage (BPP). The biocide dosing passage has venturi (V) before leading to the bottom chamber. The venturi (V) is connected to a biocide container (BCC) placed at a lower level compared to the venturi through a biocide suction passage (BSP). The bottom chamber (BC) has a filter (F) made of spirally would polyester cloth. The filter leads to a collection chamber (CC).

Figure -2 shows the blown up view of the section C as shown in the Figure-1. Figure-2 indicates the relative configuration and dimensions of the biocide dosing passage with the venturi and the bypass passage. As shown, the two passages are parallelly configured. The passage shown on the left is the biocide dosing passage (BDP). The biocide dosing passage has an input zone having a cross-sectional area (A_{IN}) as shown in Figure- 2. The inlet zone leads to the venturi (V) which has a constricted zone having a cross sectional area (Aᵥ) as shown. The constricted zone is connected to the biocide container (not shown) through the biocide suction passage (BSP). The bypass passage (BPP) is shown on the right in the Figure-2. In this particular embodiment it is a simple cylindrical tube having a cross sectional area (A_{BP}) as shown.

When in use, water is fed into the top chamber as shown by the arrow (IN). By the force of gravity a part of the water flows down through the biocide dosing passage (BDP) and a part of the water flows down through the bypass passage (BPP). When the water flowing through the biocide dosing passage passes through the venturi it increases in velocity and causes a decrease in pressure thereby sucking biocide up against gravity from the biocide chamber (BC) up through the biocide suction passage (BSP) into the venturi to mix with the water flowing therethrough to flow down in to the bottom chamber (BC). The two passages viz the biocide dosing passage (BDP) and the bypass passage (BPP) are so configured that a larger volume of water flows through the by pass passage as compared to the biocide dosing passage. The relative flow rates through the two passages ensures, on the one hand, the desired dilution of the liquid biocide down to the low ppm levels desired, while on the other hand ensures sufficient turbulence in the bottom chamber to ensure quick and efficient mixing of the biocide with the water. Not wishing to be bound by theory, in addition to the above two phenomenon, it is believed that the principle of sequential dilution further helps in achieving the desired accuracy and reproducibility in the dilution of the biocide. The water that collects in the bottom chamber is filtered free of particulate matter by passing through the filter (F) to collect in the collection chamber (CC) wherefrom purified water is dispensed as shown in the direction shown by arrow (OUT).

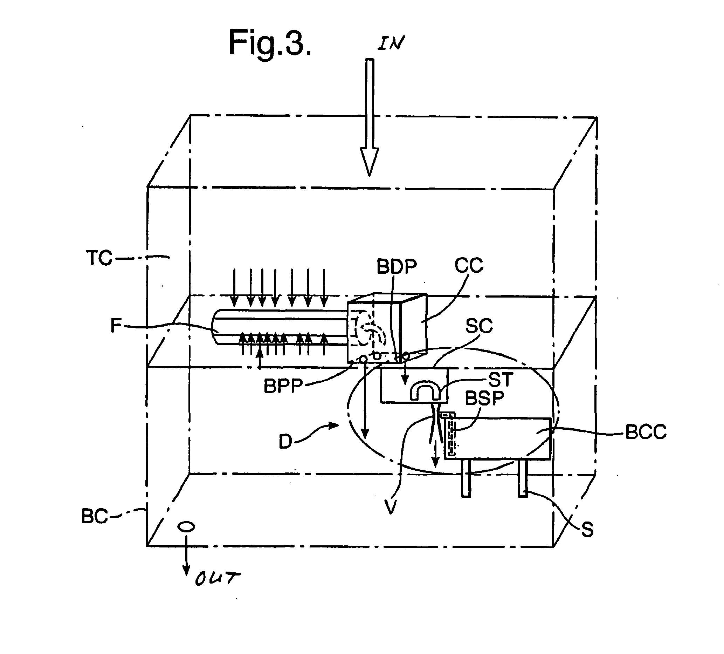

Referring now to figure 3, the water purification device has top chamber (TC) and bottom chamber (BC), connected through two parallelly configured passages i.e. a biocide dosing passage (BDP) and a by-pass passage (BPP). The source water is made to pass through a filter (F), followed by a collection chamber (CC), before it enters the biocide dosing passage (BDP). The filter (F) is preferably made of carbon or fabric or a combination, which primarily removes suspended particulates, cysts, organics, colour and odour. The by-pass passage in turn opens into a siphon container (SC) which includes an inverted U-shaped siphon-tube (ST). One end of the siphon tube (ST) is connected to, and is in fluid communication with a venturi (V), which is connected to a biocide container (BCC) placed at a lower level compared to the venturi through a biocide suction passage (BSP). The biocide container is supported by two supports (S).

In use, water is fed into the top chamber as shown by the arrow (IN). It passes through the filter (F) and thereafter enters the collection chamber (CC). The collection chamber has a by-pass passage (BPP) and the biocide dosing passage (BDP). After filtration, the output filtered water is divided into two streams, one stream passes through a siphon chamber (SC) and the other stream passes through the bypass passage (BPP) and enters directly into the bottom chamber (BC). Siphon chamber (SC) has the siphon tube (ST) connected to the base of the siphon chamber, which is in fluid communication with the venturi (V) attached to the siphon tube from outside of the siphon chamber. By the force of gravity, a part of the water flows down through the biocide dosing passage (BDP) and a part of the water flows down through the bypass passage (BPP). When the water level in the siphon tube (ST) increases up to its height, the water flows through the siphon tube and then through the venturi (V). This further helps in providing for a nearly constant flow of water. The flowing water creates a suction pressure thereby sucking biocide up against gravity from the biocide chamber (BC) up through the biocide suction passage (BSP) into the venturi to mix with the water flowing therethrough to flow down in to the bottom chamber (BC). The two passages viz the biocide dosing passage (BDP) and the bypass passage (BPP) are so configured that a larger volume of water flows through the by pass passage as compared to the biocide dosing passage. The relative flow rates through the two passages ensures, on the one hand, the desired dilution of the liquid biocide down to the low ppm levels desired, while on the other hand ensures sufficient turbulence in the bottom chamber to ensure quick and efficient mixing of the biocide with the water. The water that collects in the bottom chamber is dispensed as shown in the direction shown by arrow (OUT).

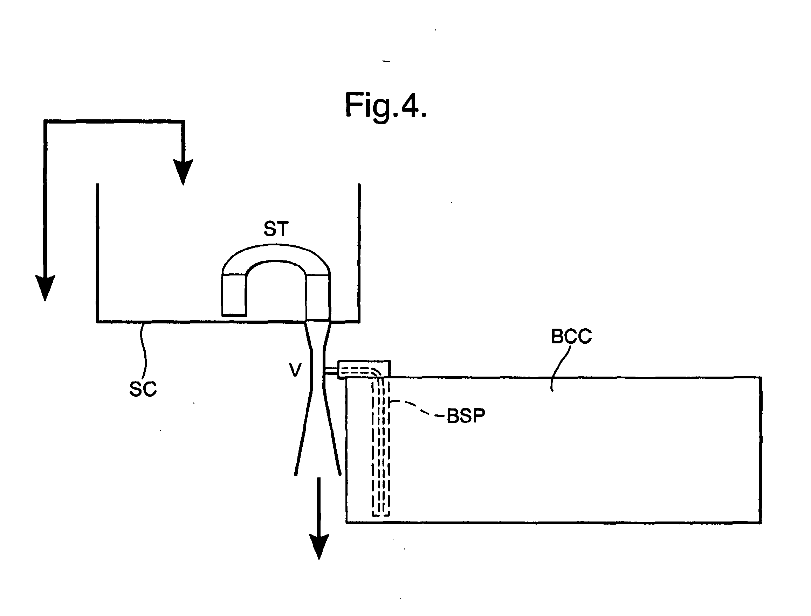

Referring now to figure 4, a blown up view of the section D (as shown in Figure-3) is shown, which clearly shows the siphon tube and the venturi, and their relative disposition in the device.
The invention will now be demonstrated with the help of the following examples.

### Examples

### Example-1

A water purification device as described in Figure-1 was used to filter water. The top chamber volume was 4 litres. The device was operated with 40 mm head of water in the top chamber. The diameter of the inlet zone of the biocide dosing passage was 4 mm and the diameter of the constricted zone of the venturi was 3 mm. A tube of 6 mm was used as the bypass passage. The biocide used was sodium hypochlorite at 4 weight% concentration in water in the biocide container. A tube of 1 mm diameter was used as the biocide suction passage. The concentration of chlorine in the bottom chamber was measured (in duplicate) and the results are summarized in Table-1.

### Comparative Example-A

A water purification device as shown in Table-1 was used except that no bypass passage was provided for. Experiments in duplicate were carried out and the results are summarized in Table-1.

**Table-1**

| Example | ppm chlorine |
|---|---|
| Example -1 (Expt -1) | 18.3 |
| Example-1 (Expt -2) | 16.0 |
| Comparative Example - A (Expt-1) | 236.4 |
| Comparative Example - A (Expt-2) | 230.0 |

In both examples i.e. Example -1 and comparative example - A, the value of A_{IN}/Aᵥ (i.e the ratio of the cross section area of the inlet zone of the biocide dosing passage to the cross sectional area of the constricted zone of the venturi) was 1.8.

The data in Table-1 indicates that chlorine in the desired low concentrations could be obtained using the device of the invention while the concentration of chlorine was too high to be of use for potable purposes using prior art devices.

### Examples - 2 to 8

A device as used in Example-1 was used to conduct the experiments of Example 2 to 8 except that biocide dosing passages having different diameters (as shown in Table-2) were used. The concentration of chlorine in the bottom chamber was measured (in duplicate) and the average concentration is indicated in Table-2.

**Table-2**

| Example | Diameter of inlet zone of biocide dosing passage (mm) | Diameter of constricted zone in venturi (mm) | A_{IN}/Aᵥ | Conc. Of chlorine in bottom chamber (ppm) |
|---|---|---|---|---|
| Ex-2 | 4 | 3 | 1.8 | 17.4 |
| Ex-3 | 6 | 3 | 4.0 | 23.8 |
| Ex-4 | 8 | 3 | 7.1 | 22.2 |
| Ex-5 | 10 | 3 | 11.1 | 18.5 |
| Ex-6 | 12 | 3 | 16.0 | 18.3 |
| Ex-7 | 15 | 3 | 25.0 | 18.9 |
| Ex-8 | 20 | 3 | 44.4 | 20.4 |

For all of the examples 2 to 8, the diameter of the bypass passage was 6 mm; thus the ratio A_{BPP}/Aᵥ was 4.0.

The data in Table-2 indicates that the invention works well over the range of A_{IN}/Aᵥ values from 1.5 to 50.

### Example- 9

A water purification device as described in Figure-3 was used to filter water. The top chamber volume was 8 litres. The device was operated with 120 mm head of water in the top chamber. The diameter of the inlet zone of the biocide dosing passage was 8 mm and the diameter of the constricted zone of the venturi was 3 mm. Five tubes of 3 mm were used as the bypass passages. The biocide used was sodium hypochlorite at 1 weight% concentration in water in the biocide container. A tube of 1 mm diameter was used as the biocide suction passage. The concentration of chlorine in the bottom chamber was measured (over 750 liters) and the results are summarized in Figure-5.

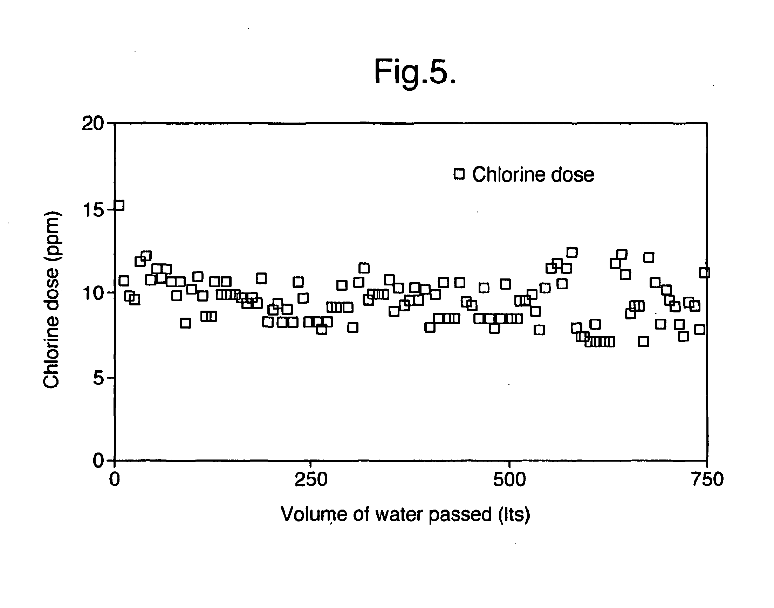

It can be readily seen (referring to Figure 5) that the dosage of Chlorine was fairly constant over the entire volume of 750 litres. Further, the concentration of Chlorine was well within the desirable range.

It will be readily appreciated that the illustrated examples provide for a simple device for dispensing liquid biocide solutions in to water to be purified in a gravity fed water purification device.

## Claims

1. A Process for the purification of drinking water with a gravity-fed drinking water purification device comprising:
(a) a top chamber in fluid communication with a bottom chamber through (i) a biocide dosing passage comprising a venturi and (ii) a by-pass passage wherein the cross-sectional area of said by-pass passage is greater than the cross-sectional area of the constricted zone of the venturi;
(b) said biocide dosing passage is in fluid communication with a biocide container containing a liquide biocide;
the process comprising the steps in batch or semi-batch mode of
i. filling the top chamber with 1 - 100 litres of water:
ii. passing the water from the top chamber to the bottom chamber through a venturi and a bypass simultaneously;
1. wherein biocide is sucked from the biocide container through the biocide dosing passage into the constricted zone of the venturis;
2. and wherein the ratio of cross-sectional area of the bypass passages to the cross-sectional area of the contricted zone of the venturi is in the range of 1.2:1 to 400:1; and
iii. collecting the water in the bottom chamber

2. A process according to claim 1 wherein the liquid biocide is an aqueous solution of sodium hypochlorite, sodium dichloro-isocyanuric acid, iodine, quaternary ammonium compounds or gluteraldehyde.

3. A process according to claim 2 wherein the liquid biocide is an aqueous solution of sodium hypochlorite.

4. A process according to claim 3 wherein the concentration of the aqueous solution of sodium hypochlorite in the biocide container is the range of 0.01 to 50 weight percent in water.

5. A process according to any one of the preceding claims wherein the concentration of the biocide in the bottom chamber is in the range of 0.5 to 100 parts per million by weight.

## Patentansprüche

1. Verfahren zum Reinigen von Trinkwasser mit einer durch Schwerkraft gespeisten Trinkwasserreinigungsvorrichtung, die umfasst:
(a) eine obere Kammer, die mit einer unteren Kammer durch (i) einen Bioziddosierungsdurchgang, der ein Venturi-Rohr umfasst, und (ii) einen Nebenleitungsdurchgang in Fluidkomminaktion steht, wobei die Querschnittsfläche des Nebenleitungsdurchgangs größer als die Querschnittsfläche des eingeschränkten Bereichs des Venturi-Rohrs ist;
(b) wobei der Bioziddosierungsdurchgang mit einem Biozidbehälter, der ein flüssiges Biozid enthält, in Fluidkomminaktion steht;
wobei das Verfahren die folgenden Schritte in einem Batch- oder Semi-Batch-Modus umfasst
i. Füllen der oberen Kammer mit 1-100 Litern Wasser;
ii. gleichzeitiges Schicken des Wassers durch ein Venturi-Rohr und eine Nebenleitung von der oberen Kammer zu der unteren Kammer;
1. wobei Biozid von dem Biozidbehälter durch den Bioziddosierungsdurchgang in den eingeschränkten Bereich des Venturi-Rohrs gesaugt wird;
2. und wobei das Verhältnis der Querschnittsfläche des Nebenleitungsdurchgangs und der Querschnittsfläche des eingeschränkten Bereichs des Venturi-Rohrs in einem Bereich von 1,2:1 bis 400:1 liegt; und
iii. Sammeln des Wassers in der unteren Kammer.

2. Verfahren nach Anspruch 1, wobei das flüssige Biozid eine wässrige Lösung von Natriumhypochlorid, Natriumdichlorisocyanursäure, Jod, quaternären Ammoniumverbindungen oder Glutaraldehyd ist.

3. Verfahren nach Anspruch 2, wobei das flüssige Biozid eine wässrige Lösung von Natriumhypochlorid ist.

4. Verfahren nach Anspruch 3, wobei die Konzentration der wässrigen Lösung von Natriumhypochlorid in dem Biozidbehälter im Bereich von 0,01 bis 50 Gewichtsprozent in Wasser liegt.

5. Verfahren nach einem der vorhergehenden Ansprüche, wobei die Konzentration des Biozids in der unteren Kammer im Bereich von 0,5 bis 100 Teile pro Million nach Gewicht liegt.

## Revendications

1. Procédé destiné à épurer de l'eau potable avec un dispositif d'épuration d'eau potable alimenté par gravité, comprenant :
(a) une chambre supérieure en communication de fluide avec une chambre inférieure par l'intermédiaire (i) d'un passage de dosage de biocide qui comprend un venturi, et (ii) d'un passage de dérivation dans lequel la section transversale dudit passage de dérivation est plus grande que la section transversale de la zone resserrée du venturi ;
(b) ledit passage de biocide est en communication de fluide avec un contenant de biocide qui contient un biocide liquide ;
le procédé comprenant les étapes suivantes dans un mode séquentiel ou dans un mode semi-séquentiel, consistant à :
i. remplir la chambre avec une quantité d'eau comprise entre 1 litre et 100 litres d'eau ;
ii. faire passer l'eau à partir de la chambre supérieure vers la chambre inférieure à travers un venturi et une dérivation de manière simultanée ;
1. dans lequel du biocide est aspiré à partir du contenant de biocide à travers le passage de dosage de biocide dans la zone resserrée du venturi ;
2. et dans lequel le rapport de la section transversale du passage de dérivation sur la section transversale de la zone resserrée du venturi se situe dans une plage comprise entre 1,2:1 et 400: 1 ; et
iii. collecter l'eau dans la chambre inférieure.

2. Procédé selon la revendication 1, dans lequel le biocide liquide est une solution aqueuse d'hypochlorite de sodium, d'acide dichloroisocyanurique de sodium, d'iode, de composés ammoniums quaternaires ou de glutéraldéhyde.

3. Procédé selon la revendication 2, dans lequel le biocide liquide est une solution aqueuse d'hypochlorite de sodium.

4. Procédé selon la revendication 3, dans lequel la concentration de la solution aqueuse d'hypochlorite de sodium dans le contenant de biocide se situe dans une plage comprise entre 0,01 et 50 pour cent en poids dans l'eau.

5. Procédé selon l'une quelconque des revendications précédentes, dans lequel la concentration du biocide dans la chambre inférieure se situe dans une plage comprise entre 0,5 et 100 parties par million en poids.
